Europäisches Patentamt

(19) European Patent Office

Office européen des brevets

(11) Publication number: **0 207 132**
**B1**

## (12) EUROPEAN PATENT SPECIFICATION

(45) Date of publication of the patent specification:
22.03.89

(51) Int. Cl.⁴: **G 02 B 5/32**

(21) Application number: **86900491.1**

(22) Date of filing: **11.12.85**

(86) International application number:
**PCT/US 85/02462**

(87) International publication number:
**WO 86/04155 (17.07.86 Gazette 86/17)**

(54) METHOD OF PRODUCING A GAUSSIAN LASER BEAM FILTER.

(30) Priority: **28.12.84 US 687222**

(43) Date of publication of application:
**07.01.87 Bulletin 87/2**

(45) Publication of the grant of the patent:
**22.03.89 Bulletin 89/12**

(84) Designated Contracting States:
**DE FR GB**

(56) References cited:
**WO-A-85/00667**

**Applied Optics, vol. 20, no. 5, 1 March 1981, New York (US), M. QUINTANILLA et al.: "Holographic filter that transforms a gaussian into a uniform beam", pp. 879-880**
**RCA Review, vol. 33, no. 1, March 1972, E.G. RAMBERG: "Holographic information storage", pp. 5-52**
**Proceedings of the SPIE, vol. 215, Recent advances in holography 1980, 1981, SPIE palos Verdes, California(US), B.J. Chang et al.: "Silver halide gelatin holograms", pp. 172-176**

(73) Proprietor: **NCR Corporation, World Headquarters, Dayton, Ohio 45479 (US)**

(72) Inventor: **FERRANTE, Ronald, Alfred, Route 1 Box 181, Senecaville, OH 43780 (US)**

(74) Representative: **Robinson, Robert George, International Patent Department NCR Limited 206 Marylebone Road, London NW1 6LY (GB)**

## Description

The present invention is directed to a method of producing a Gaussian laser beam filter and more particularly to the production of a holographic phase filter capable of converting a high-powered Gaussian laser input into a uniform irradiance output.

The science of holography deals with a method used to produce three dimensional images by laser light and to record on a photosensitive emulsion the interference pattern from which an image can be reconstructed.

A hologram is the name given to a thin film having an interference pattern recorded thereon. The interference pattern is usually produced by a source of coherent light which is normally split into two beams, one of which is directed onto the sheet of photosensitive film and the other of which is directed onto a subject. The beam directed onto the subject is reflected onto the sheet of film with waves of varied orientation and wave front curvature. The reflected light waves and the undisturbed beam are recombined at the film where they interfere as pattern of light and dark areas which are optically recorded. Another way of defining a hologram is a recording of the three dimensional intensity distribution of the interference pattern produced by the interaction of two or more mutually coherent monochromatic waves.

Holograms have been utilized in scanning an object such as a universal product code (UPC) label to read the data contained therein. An example of such a scanning arrangement may be found in United States Patent No. 4 224 509.

In manufacturing the holographic system used in the above-mentioned scanning apparatus, a laser is used as a source of coherent light along with a plurality of holograms. Where it is required that coherent light be of uniform illumination, objective lenses are used to expand the beam and then limit the expansion with a collimating lens since the laser projects a beam whose cross-sectional profile is approximately Gaussian. In order to overcome this deficiency in a laser beam, optical filters have been proposed. However, the manufacture of such optical filters is rather costly.

This advantage is somewhat alleviated by a method disclosed in Applied Optics, Vol 20, No 5, 1981, which produces a holographic filter transforming a Gaussian beam into a uniform beams. In this method a hologram is recorded on a photographic plate which is then developed using a bromine bleach. A disadvantage of the filter so produced is that it is susceptible to thermal laser damage at high beam power.

It is an object of the present invention to provide a low loss, high efficiency, holographic phase filter which is higly resistant to thermal laser damage.

Thus according to the invention, there is provided a method of producing an optical filter, including the steps of providing a source of coherent light having an intensity which varies from point to point aver its cross-sectional area in accordance with a predetermined Gaussian function; splitting the beam of light emitted from said source of coherent light into a reference beam and an object beam; focusing the beams onto a photosensitive gelatin film positioned at a predetermined distance from said source of light; explosing the photosensitive gelatin film to said beam of light; and developing the exposed photosensitive film to produce a holographic phase-type filter which, when reinserted at said predetermined distance from said source of light, will cause the beam of light emerging from the filter to have a uniform irradiance, characterized in that the exposed film is developed using a tanning bleach and a solution of water and isopropanol.

An advantage of the filter obtained by the method according to the invention is that it uses a single diffraction order to smooth out the beam profile.

One embodiment of the present invention will now be described, by way of example, with reference to the accompanying drawings in which:

Fig. 1 is a schematic representation of a system for constructing the Gaussian beam filter of the present invention.

Fig. 2 is a diagram of the theoretical power transmission of a series of phase Gaussian filters; and

Fig. 3 is a diagram of the measured power transmission of the filters shown in Fig. 2.

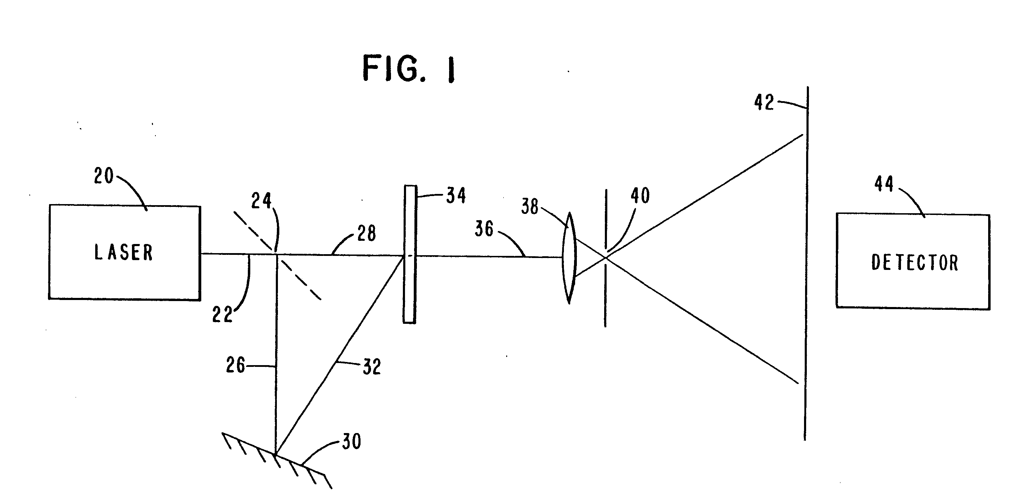

Referring now to Fig. 1, there is shown a schematic representation of a system for constructing a holographic disk which is used in a holographic scanning system and illustrates the fabrication geometry for a holographic Gaussian filter. The system includes a 50 mW helium-neon laser 20 whose light output 22 is directed into a beam splitter 24 splitting the beam into two light beam segments 26 and 28. The beam segment 26 is directed toward a mirror 30 which deflects the beam segment as an object beam 32 toward a Gassian type filter 34. The Gaussian filter 34 in turn directs the light beam as a segment 36 toward a microscope lens 38 and then through a pinhole 40.

In order to reduce the cost of manufacturing the holographic filter 34, it was found that by exposing a photosensitive film to the output of a laser and after developing the film, reinserting the exposed film at its original position, the output beam of the filter was of a uniform illumination. The phase filter can be recorded in the red or near infrared region of the spectrum using a high resolution photographic plate followed by silverhalide gelatin (SHG) processing or in the blue-green region of the spectrum using a dichromate-sensitized gelatin (DG) film followed by waterisopropanol processing. It is noted that either process will produce a low loss, high efficiency, volume phase-type filter.

In fabricating such a filter, a photographic plate was inserted in front of the helium-neon laser 20 at a specified distance, thereby exposing the plate to the light output of the laser. The exposed plate was then developed for 5 minutes in developer D-19, treating the plate for 1 minute in the stop bath SB-1, washing in water for 5 minutes, bleaching in R-10 tanning bleach for 2 minutes, water washing for 5 minutes, fixing the plate for 10 minutes in a rapid fixer solution, washing the plate for 5 minutes in a 50/50 solution of water and isopropanol, washing the plate for 5 minutes in a 100% solution of isopropanol, and air drying the plate. After the plate has been dried, a cover plate is cemented over the plate for environmental protection. After developing, the developed plate was reinserted at its original position where it was found that the plate diffracted most strongly the central portion of the laser output beam, thus eliminating the original Gaussian irradiance profile of the laser beam. Where that portion of the laser beam has the highest light irradiance, the corresponding portion of the developed plate has the highest diffraction efficiency (plus 1 order), thereby limiting the amount of the light passing through the plate. For those portions of the laser beam having the lowest light irradiance, the corresponding portion of the plate will be the lowest diffraction efficiency. In measuring the light output of the filter 34, the filtered output is directed through the microscopic object lens 38 and spatially filtered by the pinhole filter 40 which produces a noise-free, constant irradiance, coherent laser beam projected on an output plane 42 where the amount of light is detected and measuring by an optical detector 44.

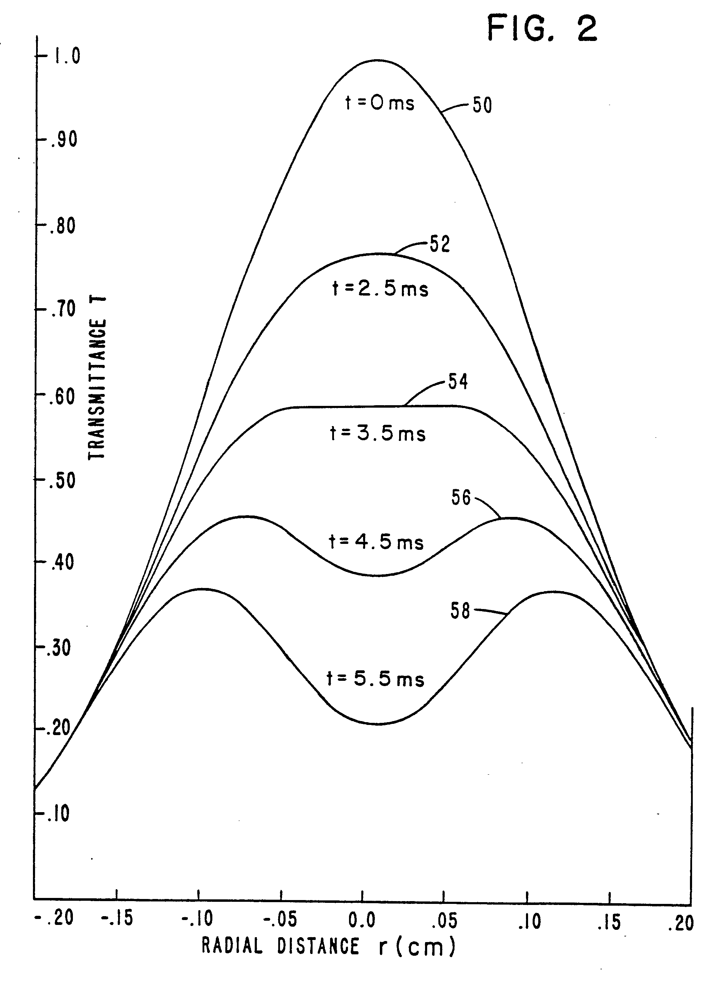

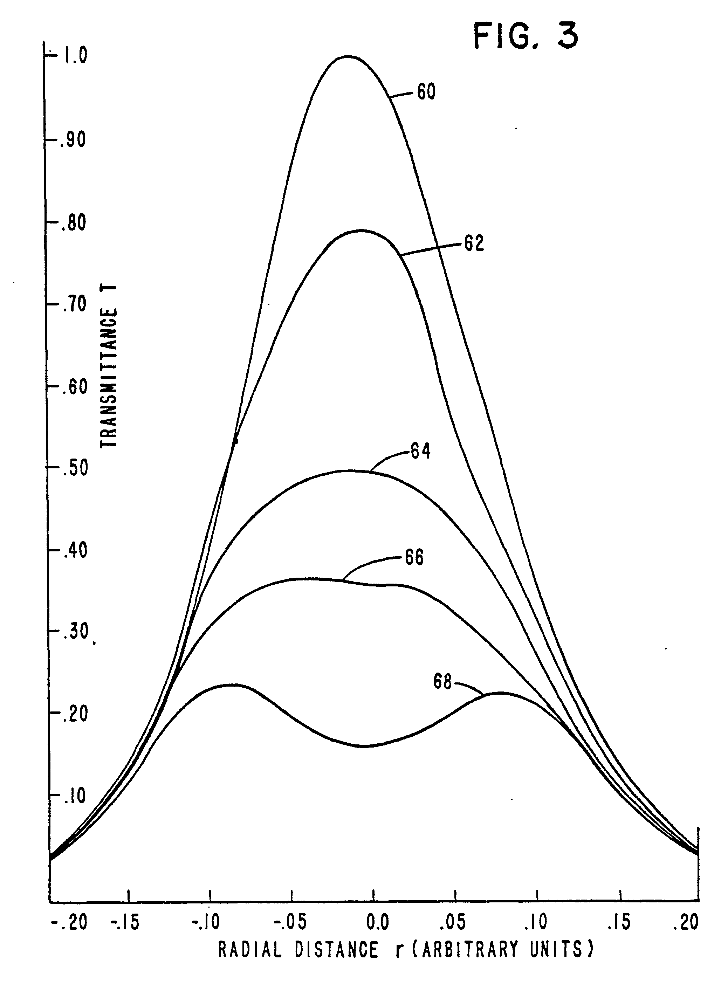

Referring now to Fig. 2, there is shown a diagram of the theoretical output irradiance for various exposure times of filters constructed in accordance with the present invention and reflects theoretical Gaussian filter transmittance T vs. radial distance r (cm). Fig. 2 shows the theoretical filter transmission while Fig. 3 shows the measured transmission for the same filter. Curve 50 of Fig. 2 discloses the irradiance profile of the power transmission of the laser without a filter showing the pronounced Gaussian effect. Curve 52 shown the output of a filter exposed to the output of a laser for 2.5 milliseconds, curve 54 is exposed for 3.5 milliseconds, curve 56 is exposed for 4.5 milliseconds, and curve 58 is exposed for 5.5 milliseconds. It will be seen from Fig. 2 that as the time of exposure of the filter to the laser output increases, a flattening of the sharply peaked Gaussian input beam transmitted through the phase filter is effected.

In a similar manner, Fig. 3 shows the measured irradiance profile of a number of filters recorded on photographic plates. Curve 60 illustrates the measured Gaussian filter transmittance T vs. radial distance r (arbitrary units) of a glass plate, curve 62 shows a hologram exposed at 2.5 milliseconds, curve 64 another hologram at 3.5 milliseconds, curve 66 a further hologram at 4.5 milliseconds and curve 68 a final hologram exposed at 5.5 milliseconds. It will be seen in comparing the curves of Fig. 3 with those of Fig. 2 that both are very similar in that both show a flattening of the Gaussian input beam. At higher exposures overmodulation is seen to produce a «hole» in the beam center. It is seen that the holographic thin film phase type photographic filter constructed in accordance with the present invention is very inexpensive compared to the manufactured metallic thin film filters.

The performance of these filters is superior to the use of Gaussian lens correctors, and it has been found also that holographic filters work well if the input is assymetrical or not a true Gaussian. Further, the disclosed filter operates on the unexpanded laser beam with scattered light being eliminated by the spatial filter so that antireflection coatings are not necessary. Contrasted with absorption type filters, the phase-type filters are not susceptible to thermal laser damage at high beam power. The holographic phase filters produced by processing dichromated-gelatin or silver-halide gelatin-sensitized films operate by diffraction and are thus highly resistant to such laser damage.

## Claims

1. A method of producing an optical filter, including the steps of providing a source of coherent light (20) having an intensity which varies from point to point over its cross-sectional area in accordance with a predetermined Gaussian function; splitting the beam of light (22) emitted from said source of coherent light (20) into a reference beam (28) and an object beam (26, 32) focusing the beams onto a photosensitive gelatin film (34) positioned at a predetermined distance from said source of light; exposing the photosensitive gelatin film (34) to said beam of light; and developing the exposed photosensitive film (34) to produce a holographic phase-type filter which, when reinserted at said predetermined distance from said source of light (20), will cause the beam of light (36) emerging from the filter to have a uniform irradiance, characterized in that the exposed film (34) is developed using a tanning bleach and a solution of water and isopropanol.

2. Method according to claim 1, characterized in that developing of said film (34) includes the steps of placing the film in developer D-19, treating the film in stop bath SB-1, washing in water, placing the film in R-10 tanning bleach, washing in water, placing the film in a rapid fixer solution, washing the film in a 50/50 solution of water and isopropanol, washing the film in a 100% solution of isopropanol and air drying the film.

3. Method according to claim 2, characterized in that said film is developed for 5 minutes, treated in said stop bath for 1 minute, washed in water for 5 minutes, bleached for 2 minutes, washed in water for 5 minutes, fixed for 10 minutes, washed in the water/isopropanol solution for 5 minutes, and washed in the 100% isopropanol solution for 5 minutes.

4. Method according to either claim 1 or 2, characterized in that a silver-halide-gelatin film is used for recording in the red or near infrared region of the spectrum, and a dichromate-sensitized gelatin film is used for recording in the blue-green region of the spectrum.

## Patentansprüche

1. Ein Verfahren zum Herstellen eines optischen Filters mit den Schritten: Vorsehen einer Quelle (20) von kohärentem Licht mit einer Intensität, die von Punkt zu Punkt über ihre Querschnittsfläche sich gemäß einer vorbestimmten Gauss'schen Funktion ändert; Aufteilen des von der Quelle (20) von kohärentem Licht ausgesandten Lichtstrahls (22) in einen Bezugslichtstrahl (28) und einen Objektstrahl (26, 32), Fokussieren der Strahlen auf einen fotoempfindlichen Gelatinefilm (34), der in einem vorbestimmten Abstand von der Lichtquelle angeordnet ist; Belichten des fotoempfindlichen Gelatinefilms (34) mit dem Lichtstrahl; und Entwickeln des belichteten fotoempfindlichen Films (34), um ein holografisches Filter vom Phasentyp zu erzeugen, das bei Wiedereinsetzen in dem vorbestimmten Abstand von der Lichtquelle (20) bewirkt, daß der von dem Filter austretende Lichtstrahl (36) eine gleichförmige Abstrahlung aufweist, dadurch gekennzeichnet, daß der belichtete Film (34) unter Verwendung eines gerbenden Bleichmittels und einer Lösung von Wasser und Isopropanol entwickelt wird.

2. Verfahren nach Anspruch 1, dadurch gekennzeichnet, daß das Entwickeln des Films (34) die Schritte aufweist: Einbringen des Films in Entwickler D-19, Behandeln des Films in einem Unterbrechungsbad SB-1, Waschen in Wasser, Einbringen des Films in R-10-Gerbbleichmittel, Waschen in Wasser, Einbringen des Films in eine Schnellfixierlösung, Waschen des Films in 50/50-Lösung von Wasser und Isopropanol, Waschen des Films in einer 100%igen Lösung von Isopropanol und Lufttrocken des Films.

3. Verfahren nach Anspruch 2, dadurch gekennzeichnet, daß der Film für fünf Minuten entwickelt, in dem Unterbrechungsbad für eine Minute behandelt, in Wasser für fünf Minuten gewaschen, für zwei Minuten gebleicht, in Wasser für fünf Minuten gewaschen, für zehn Minuten fixiert, in der Wasser/Isopropanollösung für fünf Minuten gewaschen und in der 100%igen Isorpopanollösung für fünf Minuten gewaschen wird.

4. Verfahren nach Anspruch 1 oder 2, dadurch gekennzeichnet, daß ein Silberhalogengelatinefilm zur Aufzeichnung in dem roten oder nahe infraroten Spektralbereich verwendet wird und daß ein durch Dichromat sensibilisierter Gelatinefilm zur Aufzeichnung in dem Blau-/Grünspektralbereich verwendet wird.

## Revendications

1. Procédé de production d'un filtre optique, comprenant les étapes qui consistent a prévoir une source de lumière cohérente (20) ayant une intensité qui varie d'un point à un autre sur l'aire de sa section transversale conformément à une fonction de Gauss prédéterminée; à diviser le faisceau de lumière (22) émis à partir de ladite source de lumière cohérente (20) en un faisceau de référence (28) et un faisceau objet (26, 32), à focaliser les faisceaux sur un film de gélatine photo-sensible (34) placé à une distance prédéterminée de ladite source de lumière; à exposer le film de gélatine photo-sensible (34) audit faisceau de lumière; et à développer le film photosensible exposé (34) pour produire un filtre holographique du type à phase qui, lorsqu'il est réinséré à ladite distance prédéterminée de ladite source de lumière (20), donne au faisceau de lumière (36) émergeant du filtre un flux lumineux uniforme, caractérisé en ce que le film exposé (34) est développé par l'utilisation d'un blanchiment durcissant et d'une solution d'eau et d'isopropanol.

2. Procédé selon la revendication 1, caractérisé en ce que le développement dudit film (34) comprend les étapes qui consistent à placer le film dans un révélateur D-19, à traiter le film dans un bain d'arrêt (SB-1), à effectuer un lavage dans l'eau, à placer le film dans un blanchiment durcissant (R-10), à effectuer un lavage dans l'eau, à placer le film dans une solution de fixateur rapide, à laver le film dans une solution en parts égales d'eau et d'isopropanol, à laver le film dans une solution à 100% d'isopropanol et à sécher le film à l'air.

3. Procédé selon la revendication 2, caractérisé en ce que ledit film est développé pendant 5 minutes, traité dans ledit bain d'arrêt pendant 1 minute, lavé dans l'eau pendant 5 minutes, blanchi pendant 2 minutes, lavé dans l'eau pendant 5 minutes, fixé pendant 10 minutes, lavé dans la solution eau/isopropanol pendant 5 minutes et lavé dans la solution à 100% d'isopropanol pendant 5 minutes.

4. Procédé selon la revendication 1 ou 2, caractérisé en ce qu'un film à gélatine sensibilisé aux halogénures d'argent est utilisé pour l'enregistrement dans la zone rouge ou proche infrarouge du spectre, et un film à gélatine sensibilisé au dichromate est utilisé pour l'enregistrement dans la zone bleu-vert du spectre.

FIG. I

FIG. 2

RADIAL DISTANCE r ( cm )

# FIG. 3